# EUROPÄISCHE PATENTSCHRIFT

(11) **EP 3 612 433 B1**
(45) Veröffentlichungstag und Bekanntmachung des Hinweises auf die Patenterteilung: **28.10.2020**
(21) Anmeldenummer: 18718764.6
(22) Anmeldetag: 11.04.2018
(51) Int. Cl.: B62D 5/04, B62D 13/04

(54) **LENKEINRICHTUNG FÜR EIN ACHSAGGREGAT, ACHSAGGREGAT MIT EINER LENKEINRICHTUNG UND VERFAHREN ZUM LENKEN EINES FAHRZEUGS**
STEERING MECHANISM FOR AN AXLE UNIT, AXLE UNIT COMPRISING A STEERING MECHANISM, AND METHOD FOR STEERING A VEHICLE
DISPOSITIF DE DIRECTION POUR UN ENSEMBLE ESSIEU, ENSEMBLE ESSIEU COMPRENANT UN DISPOSITIF DE DIRECTION ET PROCÉDÉ PERMETTANT DE DIRIGER UN VÉHICULE

(30) Priorität: 20.04.2017 DE 102017108378
(43) Veröffentlichungstag der Anmeldung: 26.02.2020
(73) Patentinhaber: SAF-HOLLAND GmbH, 63856 Bessenbach (DE)
(72) Erfinder: WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2018/059222
(87) Internationale Veröffentlichungsnummer: WO 2018/192810

(56) Entgegenhaltungen:
- EP-A1- 3 251 921
- EP-A2- 2 944 549
- WO-A1-2015/010671
- DE-A1-102009 039 164
- US-A- 5 558 350
- US-A1- 2007 216 134

## Beschreibung

Die vorliegende Erfindung betrifft eine Lenkeinrichtung für ein Achsaggregat, ein Achsaggregat mit einer Lenkeinrichtung und ein Verfahren zum Lenken eines Fahrzeugs.

Aus dem Stand der Technik sind Zwangslenkungssystem bekannt, mit denen beispielsweise an einem Achsaggregat eines Sattelanhängers bzw. Zentralachsanhängers angelenkte Fahrzeugräder verschwenkbar sind, um die Fahrzeugräder entsprechend einer aktuell gewünschten Bewegungsrichtung auszurichten. Hierzu sind die Fahrzeugräder mittelbar oder unmittelbar mit einem Spurhebelelement verbunden, das wiederum schwenkbar am Achsaggregat angebunden ist. Um die Ausrichtung des Fahrzeugrads zu veranlassen, wird das Spurhebelelement mittels einer Lenkeinrichtung verschwenkt. In einem Sattelanhänger bzw. Zentralachsanhänger wird dabei typischerweise ein Relativwinkel zwischen einer den Sattelanhänger bzw. Zentralachsanhänger ziehenden Zugmaschine und dem Sattelanhänger bzw. Zentralachsanhänger erfasst, insbesondere elektrisch erfasst, und die Fahrzeugräder entsprechend abhängig vom Relativwinkel mittels der Lenkeinrichtung ausgerichtet.

Typischerweise umfassen die Lenkeinrichtungen hierbei hydraulische oder mechanische Systeme als Antriebseinrichtung, mit denen das Verschwenken des Spurhebelelements veranlasst wird. Diese Systeme erfordern allerdings einen vergleichsweise hohen Montageaufwand und beschränken die Ausgestaltung des Fahrzeugs.

Die US 2007/0216134 A1 betrifft eine Traktor-Anhänger-Kombination wobei der Anhänger über eine Sattelkupplungsanordnung mit dem Zugfahrzeug verbunden ist und wobei die Sattelkupplungsanordnung mit einer Steuereinheit für den Anhänger versehen ist.

Die WO 2015/010671 A1 offenbart die Präambel des unabhängigen Anspruchs 1 und betrifft eine Nachlaufachse mit Zwangslenkung, aufweisend mindestens eine Einheit zur Steuerung der Zwangslenkung und eine Einheit zur Erfassung des Winkels zwischen einem zur Nachlaufachse zugeordneten Anhänger und einer Zugmaschine oder eines weiteren Anhängers.

Die EP 2 944 594 A2 und die EP 3 251 921 A1 zeigen Anordnungen von Rutenzügen.

Die DE 10 2009 039 164 A1 betrifft eine Lenkvorrichtung zum Einstellen eines Radeinschlagwinkels eines Rades eines Kraftfahrzeugs, insbesondere für eine Hinterradlenkung.

Die US 5 558 350 A offenbart einen Winkelsensor zum Messen eines Winkels zwischen zwei starren Körpern.

Es ist somit eine Aufgabe der vorliegenden Erfindung eine Lenkeinrichtung bereitzustellen, die gegenüber den aus dem Stand der Technik bekannten Lenkeinrichtungen, insbesondere in Hinblick auf den Montageaufwand, verbessert ist.

Die Aufgabe wird erfindungsgemäß durch eine Lenkeinrichtung für ein Achsaggregat mit den Merkmalen des Anspruchs 1, und ein Verfahren zum Lenken eines Fahrzeugs gemäß Anspruch 10 gelöst.

Bevorzugte Ausgestaltungen der Erfindung sind in den abhängigen Ansprüchen sowie der nachfolgenden Beschreibung, insbesondere im Zusammenhang mit den beiliegenden Figuren, angegeben.

Erfindungsgemäß ist eine Lenkeinrichtung für ein Achsaggregat vorgesehen, insbesondere für ein Achsaggregat eines Sattelanhängers bzw. Zentralachsanhänger, wobei das Achsaggregat ein schwenkbares Spurhebelelement aufweist, wobei die Lenkeinrichtung eine an das Spurhebelelement anbindbare elektrische Antriebseinheit zur Ausrichtung des Spurhebelelements aufweist. Gegenüber dem Stand der Technik erweist sich die erfindungsgemäße Lenkeinrichtung als vorteilhaft, weil bei einer elektrischen Antriebseinheit auf ein aufwendiges individuelles Ausgleichen des Ölvolumens verzichtet werden kann, wie es bei andernfalls verwendeten Pneumatik- bzw. Hydraulikzylindern erforderlich ist. Stattdessen lassen sich die elektrischen Antriebseinrichtungen stets gleichartig montieren. Insbesondere ist es vorgesehen, dass ein Fahrzeugrad mittelbar bzw. unmittelbar mit dem Spurhebelelement verbunden ist, wobei das Fahrzeugrad vorzugsweise derart mit dem Spurhebelelement verbunden ist, dass ein Verschwenken des Spurhebelelements zu einer entsprechenden Verschwenkung des Fahrzeugrads um einen gewünschten Schwenkwinkel führt. Im Falle eines Sattelanhängers bzw. Deichselanhängers, Zentralachsenanhängers oder Nachläufers ist es bevorzugt vorgesehen, dass die Lenkeinrichtung abhängig von einem Relativwinkel zwischen dem Anhänger und der Zugmaschine, die den Anhänger zieht, das Spurhebelelement und damit das Fahrzeugrad verschwenkt. Der Sammelbegriff Achsaggregat umfasst insbesondere sowohl Achsstummel als auch starre Achskörper, die sich im Wesentlichen über die gesamte Querlänge des Fahrzeugs erstrecken. Hierbei ist das Achsaggregat positionsfest bzw. starr mit einem Fahrzeugchassis bzw. Fahrzeugrahmen verbunden. Weiterhin ist es bevorzugt vorgesehen, dass die Lenkeinrichtung im montierten Zustand in einer Fahrzeugquerrichtung gesehen zwischen zwei gegenüberliegenden und in Fahrzeugquerrichtung fluchtend zueinander angeordneten Fahrzeugrädern bzw. Spurhebelelementen angeordnet ist. Insbesondere ist die elektrische Antriebseinheit mittelbar oder unmittelbar an das Spurhebelelement angebunden. Vorstellbar ist es auch, dass die elektrische Antriebseinheit positionsfest zum Achsaggregat angeordnet ist, d. h. die elektrische Antriebseinheit wird während der Veranlassung des Verschwenkens des Spurhebelelements nicht bewegt, insbesondere nicht verschwenkt. Weiterhin ist es vorgesehen, dass die Spurhebelelemente an einem einer Außenseite des Fahrzeugs zugewandten Ende bzw. Endbereich des Achsaggregats angeordnet sind. Im Falle eines sich im Wesentlichen über die gesamte Fahrzeugquerrichtung erstreckenden Achsköpers sind die Spurhebelelemente an gegenüberliegenden Endbereichen angeordnet. Unter Endbereichen sind insbesondere die Bereiche zu verstehen, die sich von der Stirnseite des Achskörpers beginnend in Fahrzeugquerrichtung gesehen bis zu 20 % einer Gesamtlänge des Achskörpers erstrecken. Vorzugsweise ist die Lenkeinrichtung derart ausgestaltet ist, dass sie stets nur auf einer Seite des Achsaggregat, beispielsweise in Fahrrichtung gesehen auf der vor dem Achsaggregat oder auf der hinter dem Achsaggregat liegenden Seite, montierbar ist. Weiterhin ist es vorgesehen, dass die elektrische Antriebseinheit im montierten Zustand im Wesentlichen auf einer Höhe mit dem Achsaggregat angeordnet ist. Vorstellbar ist es aber auch, dass die elektrische Antriebseinheit zur bauräumlichen Anpassung höhenversetzt zum Achsaggregat verläuft.

Gemäß einer weiteren Ausführungsform der vorliegenden Erfindung ist es vorgesehen, dass die Lenkeinrichtung ein Lenkhebelelement aufweist, in das die elektrische Antriebseinheit integrierbar ist. Vorzugsweise ist das Lenkhebelelement derart ausgestaltet, dass dessen Länge änderbar ist. Durch eine Längenänderung lässt sich dann ein Verschwenken des Spurhebelelements veranlassen. Hierzu ist das Lenkhebelelement vorzugsweise an einem Ende positionsfest angeordnet und mit dem anderen Ende an das Spurhebelelement angelenkt bzw. verbunden. Vorstellbar ist dabei auch, dass das Lenkerhebelelement direkt oder indirekt über eine zusätzliche Schwinge mit dem Spurhebelelement verbunden ist. Beispielsweise ist das Lenkhebelelement als Hubzylinder ausgestaltet, dessen Länge mittels der elektrischen Antriebseinrichtung veränderbar ist, insbesondere kontrolliert änderbar ist. Vorzugsweise ist die elektrische Antriebseinrichtung in das Lenkhebelelement integriert, wobei die elektrische Antriebseinrichtung einen Teil des Lenkhebelelements bildet. Vorzugsweise ist die elektrische Antriebseinrichtung an einem Ende des Lenkhebelelements, besonderes bevorzugt am positionsfesten Ende, integriert bzw. eingebaut.

Gemäß der vorliegenden Erfindung ist es vorgesehen, dass die elektrische Antriebseinheit und/oder das Lenkhebelelement an einen Achskörper des Achsaggregats anbindbar ist. Dadurch ist es in vorteilhafter Weise möglich, das Lenkhebelelement am Achskörper abzustützen. Insbesondere ist das Lenkhebelelement an das Achsaggregat starr angebunden. Beispielsweise ist das Lenkhebelelement mit einem seiner Enden bzw. dem Ende, in das die elektrische Antriebseinheit integriert ist, an den Achskörper angebunden. Durch die vergleichsweise nahe Anordnung der elektrischen Antriebseinrichtung zum Achskörper, der für vergleichsweise hohe Belastungen im Betrieb ausgelegt ist, lässt sich das Eigengewicht der elektrischen Antriebseinrichtung vom Achskörper mittragen bzw. mitstützen. Die Anordnung am Achskörper erweist sich gegenüber den aus dem Stand der Technik bekannten Lenkeinrichtungen ebenfalls insofern als vorteilhaft, als dass sie auch für Fahrzeuge geeignet ist, die zwischen den einzelnen Achsen bzw. Achsaggregaten teleskopierbar, insbesondere in Fahrzeuglängsrichtung teleskopierbar, sind. Mit anderen Worten: die Lenkeinrichtung beeinflusst hier die Ausgestaltung des Fahrzeugs nicht. Außerdem ist der Aufwand am Fahrzeugchassis bzw. Fahrzeugrahmen bei der Montage geringer als es bei solchen Lenkeinrichtungen der Fall ist, bei denen die Lenkeinrichtungen am Fahrzeugchassis fixiert werden müssen.

Vorzugsweise ist es vorgesehen, dass das Lenkhebelelement schräg zum Achskörper verläuft, insbesondere gegenüber dem Achskörper um einen Winkel zwischen 2° und 45°, bevorzugt zwischen 5° und 35°, geneigt verläuft. Erfindungsgemäß ist es vorgesehen, dass das Spurhebelelement um eine Schwenkachse schwenkbar ist, wobei das Lenkhebelelement in einem ersten Anlenkpunkt am Spurhebelelement und in einem zweiten Anlenkpunkt am Achskörper anbindbar bzw. festlegbar ist, wobei ein Verhältnis eines ersten Abstands zwischen dem ersten Anlenkpunkt und der Schwenkachse zu einem zweiten Abstand zwischen dem zweiten Anlenkpunkt und der Schwenkachse einen Wert zwischen 0,15 und 0,45, bevorzugt zwischen 0,23 und 0,37 und besonders bevorzugt zwischen 0,28 und 0,33 annimmt. Durch die Einstellung des Wertebereichs zwischen 0,28 und 0,33 lässt sich eine besonders vorteilhafte Hebelwirkung für die Lenkeinrichtung einrichten. Hierbei bemisst sich der erste Abstand in einer senkrecht zur Schwenkachse verlaufenden Richtung. Weiterhin ist es vorstellbar, dass das Lenkhebelelement im zweiten Anlenkpunkt starr mit dem Achskörper verbunden ist, beispielsweise angeschraubt, angeschweißt oder mittels einer Manschette fixiert ist und/oder dass das Lenkhebelelement und das Spurhebelelement zueinander verschwenkbar gelagert sind und sich beim Verschwenken des Spurhebelelements ein Winkel zwischen dem Spurhebelelement und dem Lenkhebelelement ändert. Weiterhin ist es vorgesehen, dass das Lenkhebelelement an einem von der Schwenkachse abgewandten Endbereich des Spurhebelelements angelenkt ist.

Weiterhin ist es bevorzugt vorgesehen, dass der zweite Anlenkpunkt näher an dem Spurhebelelement gelegen ist, das dem Spurhebelelement in Fahrzeugquerrichtung gesehen gegenüberliegt, an dem wiederum das Lenkhebelelement über den ersten Anlenkpunkt angebunden ist. Insbesondere ist es vorgesehen, dass das Lenkerhebelelement und/oder die Antriebseinheit im zweiten Anlenkpunkt schwenkbar an den Achskörper angebunden ist. Vorzugsweise ist es vorgesehen, dass das Lenkerhebelelement länger als die Hälfte der in Fahrzeugquerrichtung bemessenen Erstreckung des Achskörpers ist.

Vorzugsweise ist es vorgesehen, dass der zweite Abstand zwischen dem zweiten Anlenkpunkt und der Schwenkachse 0,2 bis 0,8 - mal, bevorzugt 0,25 bis 0,55-mal und besonderes bevorzugt 0,35 und 0,45-mal so groß ist wie eine in dieselbe Richtung bemessene Achskörperlänge. Insbesondere zusammen mit den im vorangegangenen Absatz angegebenen Verhältnissen zwischen dem ersten Abstand und dem zweiten Abstand lässt sich eine optimale Hebelwirkung für ein in Hinblick auf den Kraftaufwand möglichst ökonomische Lenkeinrichtung bereitstellen, die zudem vergleichsweise wenig Bauraum in Anspruch nimmt. Weiterhin ist es vorgesehen, dass das Verhältnis des zweiten Abstands zu einem dritten Abstand zwischen der Schwenkachse und einer weiteren Schwenkachse, an der ein weiteres Spurhebelelement angelenkt ist, einen Wert zwischen 0,95 und 0,3, bevorzugt zwischen 0,8 und 0,5 annimmt.

Gemäß einem weiteren Aspekt der vorliegenden Erfindung ist es vorgesehen, dass die elektrische Antriebseinheit einen oder mehrere Elektromotoren, vorzugsweise zwei Elektromotoren, umfasst, wobei insbesondere eine Mehrheit der Elektromotoren, vorzugsweise alle Elektromotoren, in einem Gehäuse anordbar ist. Durch die Verwendung mehrere Elektromotoren lässt sich in vorteilhafter Weise die Lenkeinrichtung auch dann noch betreiben, wenn einer der Elektromotoren ausfällt. Hierzu werden beispielsweise zwei Elektromotoren derart ausgelegt, dass in einem Normalbetrieb, in dem beiden Elektromotoren betrieben werden, die beiden Elektomotoren mit 50 % ihres maximalen Leistungsvermögens betrieben werden. Dadurch kann bei einem Ausfall eines Elektromotors der andere Elektromotor den ausgefallenen Elektromotor kompensieren, ohne überlastet zu werden. Die im Normalbertrieb abverlangten, vergleichsweise weit unterhalb des maximalen Leistungsvermögens liegenden Leistungen wirken sich zudem positiv auf die Lebensdauer der elektrischen Antriebseinheit aus. Diese Kompensationsfähigkeit erweist sich zudem gegenüber den im Stand der Technik verwendeten hydraulischen oder pneumatischen Hubzylindern als vorteilhaft, bei denen eine redundante Auslegung nicht ohne weiteres gegeben ist. Weiterhin ist es bevorzugt vorgesehen, dass der erste Elektromotor und der zweite Elektromotor in einer durch eine Längsrichtung des Lenkhebelelements vorgegebenen Richtung hintereinander angeordnet sind. Mittels des Gehäuses lassen sich die Elektromotoren in vorteilhafter Weise vor äußeren Umwelteinflüssen, wie z. B. Brems- oder Asphaltstaub, schützen. Unter den Sammelbegriff Elektromotor fallen vorzugsweise auch Linearmotoren.

In einer weiteren beispielhaften Ausführungsform ist es vorgesehen, dass die Lenkeinrichtung eine Getriebeeinrichtung, beispielsweise eine Kugelumlaufspindel, eine Planetenwälzgetriebe oder eine Zahnstange, zur Kraftübersetzung bzw. Transformation der elektrischen Antriebseinheit in eine Translationsbewegung umfasst. Mittels der Getriebeeinrichtung lässt sich ein von den Elektromotoren ausgehender Rotationsantrieb in eine gewünschte Längenveränderung des Lenkhebelelements umsetzen. Dabei erweist sich insbesondere ein Planetenwälzgetriebe als vorteilhaft, weil es die Kopplung mindestens zweier Elektromotoren an ein gemeinsames Getriebe erlaubt. Alternativ ist es vorstellbar, dass die Zahnstange am Lenkhebelelement angeordnet ist oder die Verzahnung in das Lenkhebelelement integriert ist und die Translationsbewegung des Lenkhebelelements durch ein in die Verzahnung eingreifendes Zahnrad veranlasst wird, das wiederum von einem Elektromotor in Rotation versetzt wird. Hierbei ist es denkbar, dass mehrere Zahnräder, denen jeweils ein Elektromotor zugeordnet ist, entlang der Verzahnung angeordnet sind.

Vorzugsweise ist es vorgesehen, dass die Lenkeinrichtung eine Steuereinrichtung zum Empfangen eines externen Steuersignals und/oder zur Ausgabe eines Steuersignals an die elektrische Antriebseinrichtung und/oder eine Speichereinrichtung zur Energieversorgung der elektrischen Antriebsmaschine umfasst. Mittels der Steuereinrichtung lassen sich beispielsweise Informationen über den Relativwinkel zwischen der Zugmaschine und dem Sattelanhänger bzw. Zentralachsanhänger empfangen, weiterverarbeiten und schließlich zur Einstellung des gewünschten, insbesondere vom Relativwinkel abhängigen, Schwenkwinkel für das Fahrzeugrad an die elektrische Antriebsmaschine weiterleiten. Es ist auch vorstellbar, dass die Steuereinrichtung zur Kommunikation mit einem Führerhaus bzw. einer Fahrerkabine oder einem externen Server ausgelegt ist, um einen Fahrer oder eine Servicewerkstatt über den Ausfall eines der Elektromotoren zu informieren. Weiterhin ist die Steuereinrichtung dahingehend konfiguriert, dass sie bei einem Ausfall eines Elektromotors nur noch die übrigen bzw. den anderen Elektromotor ansteuert und dabei die Leistung des ausgefallenen Elektromotors selbstregulierend kompensiert. Bei den Speichereinrichtungen, insbesondere elektrischen Energiespeichereinrichtungen, handelt es sich vorzugsweise um Batterien, insbesondere AGM Batterien, Supercaps oder Ähnliches. Mittels einer Boostereinheit lassen sich die Speichereinrichtungen möglichst maximal aufladen. Weiterhin ist es vorstellbar, dass das Fahrzeug einen Elektromotor aufweist, dessen Energiegewinn bei einer Rekuperationsbremsung zum Aufladen der Speichereinrichtungen mitgenutzt wird.

Zweckmäßig ist es vorgesehen, dass jedem Elektromotor jeweils eine Speichereinrichtung zugeordnet ist, wobei die Lenkeinrichtung, insbesondere die Speichereinrichtungen, derart ausgestaltet ist, dass die einzelnen Elektromotoren mit unterschiedlichen Energien versorgbar sind bzw. versorgt werden. Dadurch lässt sich mit Vorteil sicherstellen, dass bei einem Ausfall einer Speichereinrichtung die Funktionalität der Lenkeinrichtung nicht beschränkt wird. Ferner ist es vorstellbar, dass die Steuereinrichtung Informationsdaten über einen Ladungszustand der jeweiligen Speichereinrichtung erhält und die Speichereinrichtung abhängig von den jeweiligen Ladungszuständen die jeweils den Speichereinrichtungen zugeordneten Elektromotoren ansteuert.

Weiterhin ist es in einer Ausführungsform vorgesehen, dass mittels der Steuereinrichtung mehrere verschiedene, jeweils einem Achsaggregat zugeordnete elektrische Antriebseinheiten ansteuerbar sind. Dadurch lassen sich bei einem mehrachsigen Fahrzeug mit Vorteil die verschiedenen Achsen ansteuern und so deren Fahrzeugräder entsprechend ändern. Als besonders vorteilhaft erweist es sich dabei, dass sich die Spurhebelelemente, die den jeweiligen Achsen bzw. Achsaggregaten zugeordnet sind, unterschiedlich weit verschwenken lassen. Beispielsweise lassen sich die Spurhebelelemente für eine erste Lenkachse um einen ersten Schwenkwinkel und die Spurhebelelemente für eine zweite Lenkachse um einen zweiten Schwenkwinkel verschwenken, wobei der zweite Schwenkwinkel relativ kleiner ist als der erste Schwenkwinkel. Mittels einer solchen Übersteuerung lassen sich die entsprechenden Fahrzeugräder am Fahrzeug möglichst optimal für den jeweils vorgegebenen Relativwinkel einstellen.

Gemäß einer weiteren Ausführungsform der vorliegenden Erfindung ist es vorgesehen, dass die Steuereinrichtung und die elektrische Antriebseinrichtung zur drahtlosen Kommunikation ausgelegt sind. Dadurch lässt sich in vorteilhafter Weise auf eine aufwendige Verdrahtung verzichten. Beispielsweise handelt es sich um eine WIFI oder Bluetooth-Kommunikation.

Vorzugsweise ist es vorgesehen, dass die Lenkeinrichtung eine mechanische, elektropneumatische oder elektrisch steuerbare Sperrvorrichtung aufweist, wobei die Sperrvorrichtung vorzugsweise in die elektrische Antriebseinheit integriert ist. Mittels der Sperrvorrichtung lässt sich ein Verschwenken der Spurhebelelemente unterbinden. Durch die Integration in die elektrische Antriebseinheit lässt sich eine besonders kompakte Sperrvorrichtung bereitstellen. Eine mechanische Sperrvorrichtung lässt sich beispielsweise mittels einer Spurstange realisieren, deren Bewegung an der Achse durch eine Kulisse mit entsprechendem Gegenstück festgelegt ist.

In einer weiteren Ausführungsform der vorliegenden Erfindung ist es vorgesehen, dass die Lenkeinrichtung eine Sensoreinrichtung umfasst, wobei die Sensoreinrichtung vorzugsweise in die elektrische Antriebseinheit oder in das Spurhebelelement integrierbar ist. Mittels der Sensoreinrichtung lässt sich mit Vorteil die aktuelle Ausrichtung des Spurhebelelements erfassen. Denkbar ist dabei, dass die Sensoreinrichtung die Information über die aktuelle Ausrichtung an die Steuereinrichtung weitergibt, die wiederum diese Information zur Ansteuerung der elektrischen Maschine nutzt. Es ist auch vorstellbar, dass die Sensoreinheit in das Lenkhebelelement integriert ist und die aktuelle Länge des Lenkhebelelements erfasst.

Zweckmäßig ist es vorgesehen, dass über eine Spurstange zwei Spurhebelelemente verschwenkbar sind oder jedem Spurhebelelement eine elektrische Antriebseinrichtung zugeordnet ist. Über die Spurstange, die im Wesentlichen parallel zum Achskörper verläuft und in einer parallel zum Achskörper verlaufenden Richtung translatorisch verschiebbar ist, lassen sich mit einer Lenkeinrichtung simultan zwei Spurhebelelemente verschwenken. Besonders bevorzugt ist die Spurstange in Fahrrichtung gesehen auf der der elektrischen Antriebseinheit gegenüberliegenden Seite des Achsenkörpers angeordnet. Alternativ ist es auch vorstellbar, dass die Spurstange eine Verzahnung aufweist oder eine Zahnstange an der Spurstange montiert ist, mit der eine die Verschwenkung der Spurhebelelemente veranlassende Translationsbewegung mittels eines oder mehrerer Elektromotoren veranlasst werden kann, wobei zumindest ein vom jeweiligen Elektromotor angetriebenes Zahnrad in die Verzahnung des Zahnstange eingreift.

Bevorzugt ist die Antriebseinheit bzw. das Lenkerhebelelement nicht unmittelbar an die Spurstange angebunden, sondern die von der Antriebseinheit ausgehende Kraft wird über das Spurhebelelement auf die Spurstange übertragen. Weiterhin ist es vorzugsweise vorgesehen, dass sich das Spurhebelelement in Fahrrichtung gesehen zu beiden Seiten des Achskörpers erstreckt. Bevorzugt steht das Spurhebelelement gegenüber dem Schwenkpunkt in Fahrtrichtung gesehen symmetrisch in beide Richtung mit der gleichen Länge ab. Es ist aber auch vorstellbar, dass das Spurhebelelement zu einer Seite hin kürzer ist. Beispielsweise ist die Länge des Spurhebelelements auf der dem ersten Anlenkpunkt gegenüberliegenden Seite kürzer oder länger als die Länge auf der Seite, auf der der ersten Anlenkpunkt angeordent ist. Insbesondere ist es vorgesehen, dass bei der Verwendung einer Spurstange das Spurhebelelement ohne ersten Anlenkpunkt in Fahrrichtung gesehen nur in einer Richtung gegenüber dem Achskörper absteht. Denkbar ist auch, dass die Spurstange am Ende des Spurhebelelement oder gegenüber dem Ende des Spurhebelelements versetzt angeordnet ist.

Ein weiterer Gegenstand der vorliegenden Erfindung ist ein Achsaggregat mit einer erfindungsgemäßen Lenkeinrichtung. Alle für die erfindungsgemäße Lenkvorrichtung beschriebenen Merkmale und deren Vorteile lassen sich sinngemäß ebenfalls auf das erfindungsgemäße Achsaggregat übertragen und andersherum.

Ein weiterer Gegenstand der vorliegenden Erfindung ist ein Verfahren zum Lenken eines Fahrzeugs, insbesondere eines Sattelanhängers bzw. Zentralachsanhängers, mit einem Achsaggregat, das ein schwenkbares Spurhebelelement aufweist, wobei das Spurhebelelement mittels einer elektrischen Antriebseinrichtung verschwenkt wird. Alle für die erfindungsgemäße Lenkeinrichtung beschriebenen Merkmale und deren Vorteile lassen sich sinngemäß ebenfalls auf das erfindungsgemäße Verfahren übertragen und andersherum. Die Nutzung einer elektrischen Antriebseinheit erweist sich insbesondere bei der Montage der Lenkeinrichtung als vorteilhaft.

Gemäß einer weiteren Ausführungsform der vorliegenden Erfindung ist es vorgesehen, dass mittels einer Steuereinrichtung ein Steuersignal, vorzugsweise ein von einem Sattelzug ausgehendes Steuersignal, empfangen, und zur Ausrichtung des Spurhebelelements an die elektrische Antriebseinrichtung weitergeleitet wird. Vorzugsweise wird das von der Steuereinrichtung empfangene Steuersignal empfangen, ausgewertet und anhand der aktuellen Betriebssituation der Lenkeinrichtung ein entsprechendes Steuersignal gesendet.

Zweckmäßig ist es vorgesehen, dass mittels der Steuereinrichtung mehrere elektrische Antriebseinrichtungen, die jeweils einem Achsaggregat oder einem Spurhebelelement zugeordnet sind, gesteuert werden, wobei insbesondere eines der Achsenaggregate gegenüber den anderen Achsaggregaten übersteuert wird. Dadurch lässt sich mit Vorteil möglichst optimal auf den aktuellen Relativwinkel zwischen der Zugmaschine und dem Sattelanhänger bzw. Zentralachsanhänger reagieren. Insbesondere versteht der Fachmann unter einem Übersteuern ein Einstellen eines ersten Schwenkwinkel an einem Achsaggregat und das Einstellen eines zweiten Schwenkwinkels zweiten Achsaggregat, wobei der erste Schwenkwinkel relativ größer ist als der zweite Schwenkwinkel. Das Achsaggregat mit dem ersten Schwenkwinkel bildet dann die erste Lenkachse.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden.

Es zeigt:
- Fig. 1:: eine Lenkeinrichtung gemäß einer ersten bevorzugten Ausführungsform der vorliegenden Erfindung in einer schematischen Darstellung
- Fig. 2:: eine Lenkeinrichtung gemäß einer zweiten bevorzugten Ausführungsform der vorliegenden Erfindung in einer schematischen Darstellung.
- Fig. 3:: eine Lenkeinrichtung gemäß einer dritten bevorzugten Ausführungsform der vorliegenden Erfindung in einer schematischen Darstellung.

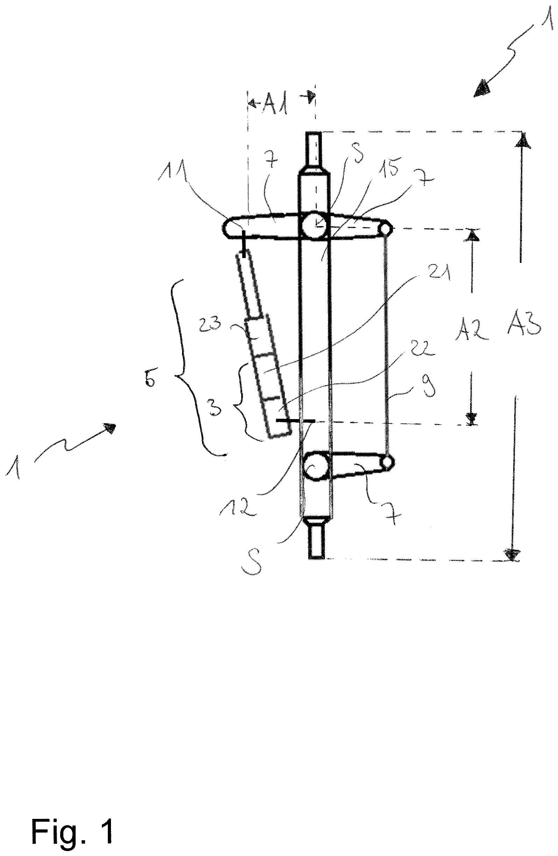

In **Figur 1** ist eine Lenkeinrichtung 1 gemäß einer ersten bevorzugten Ausführungsform der vorliegenden Erfindung dargestellt. Insbesondere handelt es sich um eine solche Lenkeinrichtung 1, die für ein Achsenaggregat 10 in einem Nutzfahrzeug, beispielsweise in einem Sattelanhänger bzw. Zentralachsanhänger, vorgesehen ist und durch die zur Anpassung an die gewünschte Bewegungsrichtung ein Verschwenken eines oder mehrerer Fahrzeugräder 17 veranlasst werden kann. In Falle eines Sattelanhängers bzw. Zentralachsanhängers wird hierbei bevorzugt ein Relativwinkel zwischen einer Zugmaschine, die den Sattelanhänger bzw. den Zentralachsanhänger zieht, und dem Sattelelanhänger erfasst, bevorzugt mittels eines elektrischen Sattelzugsensors erfasst. Dabei bemisst sich der Relativwinkel zwischen den jeweiligen Längsachsen der Zugmaschine und des Sattelanhängers bzw. Zentralachsanhängers. Mittels der Lenkeinrichtung 1 lässt sich dann beispielsweise abhängig vom aktuellen Relativwinkel eine Radstellung, d. h. ein Schwenkwinkel des Fahrzeugrads 17, einstellen.

Zum Verschwenken des Fahrzeugrads ist hierbei ein Spurhebelelement 7 vorgesehen, das in einem Schwenkpunkt S an einen Achskörper 15 des Achsaggregats schwenkbar angebunden ist und bei dessen Verschwenken das Fahrzeugrad 17 mitverschwenkt wird. In der dargestellten Ausführungsform ist das Spurhebelelement 7 derart ausgestaltet, dass es im angelenkten Zustand den Achskörper 15 kreuzt. Um ein Verschwenken des Spurhebelelements 7 zu veranlassen, ist die Lenkeinrichtung 1 vorgesehen, die im vorliegenden Ausführungsbeispiel ein Lenkhebelelement 5 aufweist und durch dessen Längenänderung ein Verschwenken des Spurhebelelement 7 verursacht wird. Mit Vorteil ist dabei in das Lenkhebelelement 5 eine elektrische Antriebseinheit 3 integriert, die es in vorteilhafter Weise möglich macht, auf hydraulische oder pneumatische Zylindervorrichtung zu verzichten. Hierbei ist das Lenkhebelelement 5 an einem ersten Anlenkpunkt 11 an das Lenkhebelelement 5 und in einem zweiten Anlenkpunkt 12 an den Achskörper 15 angebunden. Insbesondere stützt sich das Lenkhebelelement 5 am zweiten Anlekpunkt 12 am Achskörper 15 ab. Weiterhin ist es bevorzugt vorgesehen, dass die elektrische Antriebseinheit 3 am dem zweiten Anlenkpunkt 12 zugewandten Ende des Lenkhebelelements 5 angeordnet ist. Dadurch wird die im Vergleich zum übrigen Lenkhebelelement 5 vergleichsweise massive elektrische Antriebseinheit 3 in vorteilhafter Weise in der Nähe des stabilen und belastbaren Achsenkörpers 1 gelagert. Weiterhin ist es vorgesehen, dass das Lenkhebelelement 5 in einem ersten Anlenkpunkt 11 am Spurhebelelement 7 und in einem zweiten Anlenkpunkt 12 am Achskörper 15 anbindbar ist, wobei ein Verhältnis eines ersten Abstands A1 zwischen dem ersten Anlenkpunkt 11 und der Schwenkachse S zu einem zweiten Abstand A2 zwischen dem zweiten Anlenkpunkt 12 und der Schwenkachse S einen Wert zwischen 0,15 und 0,45, bevorzugt zwischen 0,23 und 0,37 und besonderes bevorzugt zwischen 0,28 und 0,33 annimmt. Darüber hinaus ist der zweite Abstand A2 zwischen dem zweiten Anlenkpunkt 12 und der Schwenkachse S 0,2 bis 0,8 - mal, bevorzugt 0,25 bis 0,55-mal und besonderes bevorzugt 0,35 und 0,45-mal so groß wie eine in dieselbe Richtung bemessene Achskörperlänge A3. Ferner sieht die dargestellte Ausführungsform eine elektrische Antriebseinheit 3 mit einem ersten Elektromotor 21 und einem zweiten Elektromotor 22 vor. Über eine mit der elektrischen Antriebeinheit 3 verbundene Getriebeeinrichtung 23, beispielsweise in Form einer Kugelumlaufspindel oder einem Planetenwälzgetriebes, lässt sich dann der vom ersten Elektromotor 21 und vom zweiten Elektromotor 22 ausgehende Antrieb in eine Translationsbewegung übersetzten, mit der sich eine gezielte Längenänderung des Lenkhebelelements 5 einstellen lässt. Die Verwendung eines zweiten Elektromotors 22 neben dem ersten Elektromotor 21 erweist sich beispielsweise insofern als vorteilhaft, dass beim Ausfall eines Elektromotors der jeweils andere Elektromotor kurzfristig die Last des ausgefallenen Elektromotors übernehmen kann. Vorzugsweise werden der erste Elektromotor 21 und der zweite Elektromotor 22 so ausgestaltet, dass sie im Normalbetrieb, d. h. in einem Betrieb, in dem der erste Elektromotor 21 und der zweite Elektromotor 22 gleichzeitig betreibbar sind, jeweils im Wesentlichen zu 50 % belastbar sind. Dadurch kann in vorteilhafter Weise sichergestellt werden, dass bei einem Ausfall eines Elektromotors der jeweils andere Elektromotor den Ausfall ausreichend kompensieren kann. Weiterhin ist es bevorzugt vorgesehen, dass für den ersten Elektromotor 21 und den zweiten Elektromotor 22 jeweils eine separate Speichereinrichtung vorgesehen ist.

In der in Figur 1 dargestellten Ausführungsform ist es darüber hinaus vorgesehen, dass zwei an gegenüberliegenden Enden des Achskörpers 15 angeordnete Spurhebelelemente 7 über eine Spurstange 9 verbunden sind, insbesondere derart, dass das Lenkeinrichtung 1 eine Verlagerung der Spurstange 9 und ein gleichzeitiges Verschwenken der Spurhebelelemente 7 bedingt. Dadurch lassen sich zwei am Achsaggregat 10 angebundene Fahrzeugräder 17 in vorteilhafter Weise simultan mit einer Lenkeinrichtung 1 verschwenken. Vorstellbar ist auch eine Steuereinrichtung 30, die externe Steuersignale, die beispielsweise eine Information über den aktuellen Relativwinkel zwischen dem Sattelanhänger bzw. Zentralachsanhänger und der Zugmaschine enthalten, empfängt, verarbeitet und an die elektrische Antriebseinheit 3 weiterleitet.

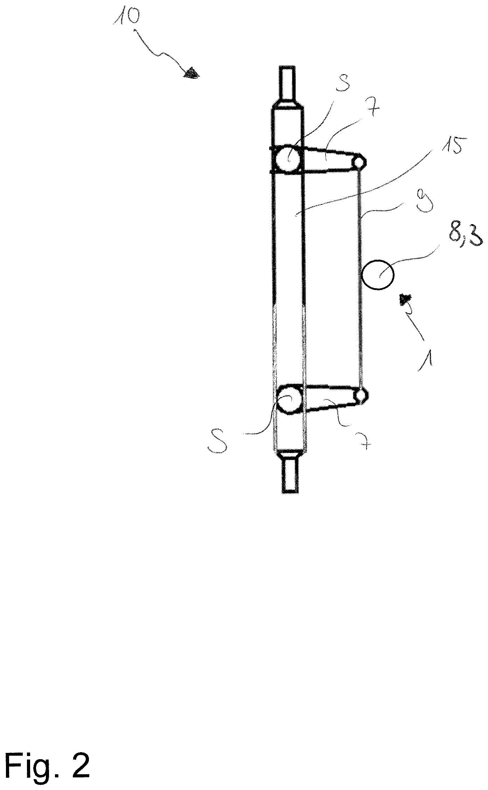

In **Figur 2** ist eine Lenkeinrichtung 1 gemäß einer zweiten bevorzugten Ausführungsform der vorliegenden Erfindung dargestellt. In dieser Ausführungsform ist es vorgesehen, dass die Lenkeinrichtung 1 eine Zahnstange umfasst, die bevorzugt an die Spurstange 9 montierbar oder in die Spurstange 9 integrierbar ist. Die Zahnstange bildet zusammen mit einem Zahnrad 8 ein Getriebe, wobei das Zahnrad 8 durch die elektrische Antriebseinheit 3, vorzugsweise durch einen Elektromotor angetrieben wird. Auf diese Weise lässt sich mittels des Elektromotors eine Translationsbewegung der Spurstange 9 und somit das Verschwenken der Spurhebelelemente 7 veranlassen. Denkbar ist auch, dass entlang der Zahnstange mehrere Zahnräder 8 angeordnet sind, die jeweils mit einem Elektromotor antreibbar sind.

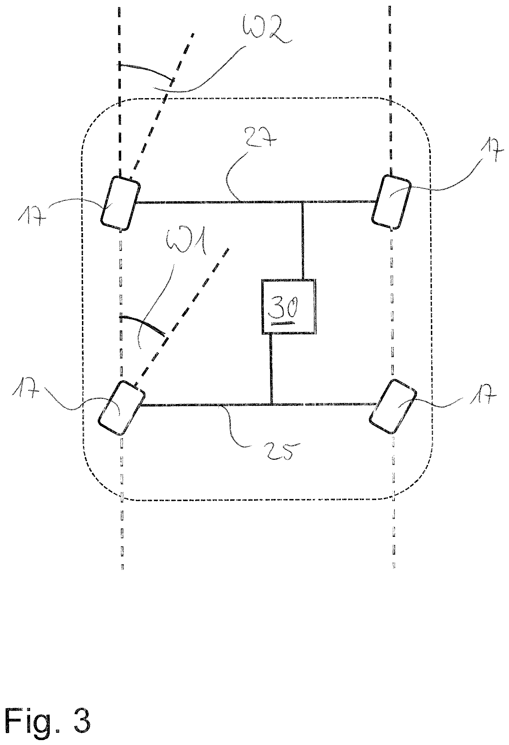

In **Figur 3** ist eine Lenkvorrichtung 1 gemäß einer dritten bevorzugten Ausführungsform der vorliegenden Erfindung dargestellt. Insbesondere ist ein Fahrzeug, beispielsweise ein Sattelanhänger bzw. Zentralachsanhänger, mit mehreren Achsaggregaten 10 illustriert, denen als Lenkeinrichtung 1 jeweils eine elektrische Antriebseinrichtung 3, vorzugsweise gemäß der Ausführungsform aus Figur 1 oder Figur 2, zugeordnet ist und die über eine gemeinsame Steuereinheit 30 ansteuerbar sind. Bevorzugt wird hierbei eine Lenkeinrichtung 1, vorzugsweise die einer ersten Lenkachse 25 zugeordnet ist, im Vergleich zu anderen Lenkeinrichtungen 1, die vorzugsweise einer oder mehreren zweiter Lenkachsen 27 zugeordnet sind, übersteuert. D. h. es lässt sich mittels der Steuereinrichtung 30 für die erste Lenkachse 25 ein erster Schwenkwinkel W1 und für die zweite Lenklaufache 27 ein vom ersten Schwenkwinkel W1 unterschiedlicher zweiter Schwenkwinkel W2 einstellen. Unter einem Übersteuern versteht der Fachmann insbesondere, dass der erste Schwenkwinkel W1 relativ größer ist als der zweite Schwenkwinkel W2.

### Bezugszeichenliste

- 1: Lenkeinrichtung
- 3: elektrische Antriebseinheit
- 5: Lenkhebelelement
- 7: Spurhebelelement
- 8: Zahnrad
- 9: Spurstange
- 10: Achsaggregat
- 11: erster Anlenkpunkt
- 12: zweiter Anlenkpunkt
- 15: Achskörper
- 17: Fahrzeugrad
- 21: erster Elektromotor
- 22: zweiter Elektromotor
- 23: Getriebeeinrichtung
- 25: erste Lenkachse
- 27: zweite Lenkachse
- 30: Steuervorrichtung
- S: Schwenkachse
- A1: erster Abstand
- A2: zweiter Abstand
- A3: Achskörperlänge
- W1: erster Schwenkwinkel
- W2: zweiter Schwenkwinkel

## Patentansprüche

1. Sattelanhängerachsaggregat oder Zentralachsanhängerachsaggregat mit einer Lenkeinrichtung (1), wobei die Lenkeinrichtung (1) ein schwenkbares Spurhebelelement (7) aufweist umfassend eine an das Spurhebelelement (7) anbindbare elektrische Antriebseinheit (3) zur Ausrichtung des Spurhebelelements (7),
wobei die Lenkeinrichtung (1) eine Sensoreinrichtung umfasst, wobei die Sensoreinrichtung in die elektrische Antriebseinheit (3) oder in das Spurhebelelement (7) integriert ist,
wobei die elektrische Antriebseinheit (3) und/oder das Lenkhebelelement (5) an einen Achskörper (15) des Achsaggregats (10) anbindbar ist,
wobei das Spurhebelelement (7) um eine Schwenkachse (S) schwenkbar ist, wobei das Lenkhebelelement (5) in einem ersten Anlenkpunkt (11) am Spurhebelelement (7) und in einem zweiten Anlenkpunkt (12) am Achskörper (15) angebunden ist,
wobei ein Verhältnis eines ersten Abstands (A1) zwischen dem ersten Anlenkpunkt (11) und der Schwenkachse (S) zu einem zweiten Abstand (A2) zwischen dem zweiten Anlenkpunkt (12) und der Schwenkachse (S) einen Wert zwischen 0,15 und 0,45 annimmt.

2. Sattelanhängerachsaggregat oder Zentralachsanhängerachsaggregat gemäß einem der vorhergehenden Ansprüche, wobei die Lenkeinrichtung ein Lenkhebelelement (5) aufweist, in das die elektrische Antriebseinheit (3) integrierbar ist.

3. Sattelanhängerachsaggregat oder Zentralachsanhängerachsaggregat gemäß einem der vorhergehenden Ansprüche, wobei das Verhältnis des ersten Abstands (A1) zwischen dem ersten Anlenkpunkt (11) und der Schwenkachse (S) zu dem zweiten Abstand (A2) zwischen dem zweiten Anlenkpunkt (12) und der Schwenkachse (S) einen Wert zwischen 0,23 und 0,37 und bevorzugt zwischen 0,28 und 0,33 annimmt.

4. Sattelanhängerachsaggregat oder Zentralachsanhängerachsaggregat gemäß Anspruch 4, wobei der zweite Abstand (A2) zwischen dem zweiten Anlenkpunkt (12) und der Schwenkachse (S) 0,2 bis 0,8 - mal, bevorzugt 0,25 bis 0,55-mal und besonderes bevorzugt 0,35 und 0,45-mal so groß ist wie eine in dieselbe Richtung bemessene Achskörperlänge (A3).

5. Sattelanhängerachsaggregat oder Zentralachsanhängerachsaggregat gemäß einem der vorhergehenden Ansprüche, wobei die elektrische Antriebseinheit (3) einen oder mehrere Elektromotoren (21, 22), vorzugsweise zwei Elektromotoren (21, 22), umfasst, wobei insbesondere eine Mehrheit der Elektromotoren (21, 22), vorzugsweise alle Elektromotoren (21, 22), in einem Gehäuse anordbar ist.

6. Sattelanhängerachsaggregat oder Zentralachsanhängerachsaggregat gemäß einem der vorhergehenden Ansprüche,
wobei die Lenkeinrichutng (1) umfasst
-- eine Steuereinrichtung (30) zum Empfangen eines externen Steuersignals und/oder zur Ausgabe eines Steuersignals an die elektrische Antriebseinrichtung und/oder
-- eine Speichereinrichtung zur Energieversorgung der elektrischen Maschine.

7. Sattelanhängerachsaggregat oder Zentralachsanhängerachsaggregat gemäß einem der Ansprüche 5 oder 6, wobei jedem Elektromotor (21, 22) jeweils eine Speichereinrichtung zugeordnet ist, wobei die Lenkeinrichtung, insbesondere die Speichereinrichtungen, derart ausgestaltet ist, dass die einzelnen Elektromotoren (21, 22) mit unterschiedlichen Energien versorgbar sind.

8. Sattelanhängerachsaggregat oder Zentralachsanhängerachsaggregat gemäß einem der vorhergehenden Ansprüche, umfassend eine mechanisch, elektropneumatische oder elektrisch steuerbare Sperrvorrichtung, wobei die Sperrvorrichtung vorzugsweise in die elektrische Antriebseinheit (3) integriert ist.

9. Sattelanhängerachsaggregat oder Zentralachsanhängerachsaggregat gemäß einem der vorhergehenden Ansprüche, wobei über eine Spurstange (9) zwei Spurhebelelemente (7) verschwenkbar sind oder jedem Spurhebelelement (7) eine elektrische Antriebseinrichtung zugeordnet ist.

10. Verfahren zum Lenken eines Sattelanhängers oder Zentralachsanhänger, mit einem Sattelanhängerachsaggregat oder Zentralachsanhängerachsaggregat gemäß einem der vorhergehenden Ansprüche, das ein schwenkbares Spurhebelelement (7) aufweist, wobei das Spurhebelelement (7) mittels einer elektrischen Antriebseinrichtung (3) verschwenkt wird.

11. Verfahren gemäß Anspruch 10, wobei mittels einer Steuereinrichtung (30) ein Steuersignal, vorzugsweise ein von einem Sattelzug ausgehendes Steuersignal, empfangen, und zur Ausrichtung des Spurhebelelements (7) an die elektrische Antriebseinrichtung (3) weitergeleitet wird.

12. Verfahren gemäß Anspruch 11, wobei mittels der Steuereinrichtung (30) mehrere elektrische Antriebseinrichtungen (3), die jeweils einem Achsaggregat (10) oder einem Spurhebelelement (7) zugeordnet sind, gesteuert werden, wobei insbesondere eines der Achsenaggregate (10) gegenüber den anderen Achsaggregaten übersteuert wird.

## Claims

1. A semi-trailer axle assembly or centre-axle trailer axle assembly with a steering device (1), wherein the steering device (1) has a pivotable track lever element (7) comprising an electric drive unit (3) which can be connected to the track lever element (7) for aligning the track lever element (7),
wherein the steering device (1) comprises a sensor device, wherein the sensor device is integrated into the electric drive unit (3) or into the track lever element (7),
wherein the electric drive unit (3) and/or the steering lever element (5) can be connected to an axle body (15) of the axle assembly (10),
wherein the track lever element (7) can be pivoted about a pivot axis (S),
wherein the steering lever element (5) is connected to the track lever element (7) at a first pivot point (11) and to the axle body (15) at a second pivot point (12),
wherein a ratio of a first distance (A1) between the first pivot point (11) and the pivot axis (S) to a second distance (A2) between the second pivot point (12) and the pivot axis (S) assumes a value between 0.15 and 0.45.

2. The semi-trailer axle assembly or centre-axle trailer axle assembly according to any one of the preceding claims, wherein the steering device has a steering lever element (5) into which the electric drive unit (3) can be integrated.

3. The semi-trailer axle assembly or centre-axle trailer axle assembly according to any one of the preceding claims, wherein the ratio of the first distance (A1) between the first pivot point (11) and the pivot axis (S) to the second distance (A2) between the second pivot point (12) and the pivot axis (S) assumes a value between 0.23 and 0.37 and preferably between 0.28 and 0.33.

4. The semi-trailer axle assembly or centre-axle trailer axle assembly according to claim 4, wherein the second distance (A2) between the second pivot point (12) and the pivot axis (S) is 0.2 to 0.8 times, preferably 0.25 to 0.55 times and more preferably 0.35 and 0.45 times as great as an axle body length (A3) dimensioned in the same direction.

5. The semi-trailer axle assembly or centre-axle trailer axle assembly according to any one of the preceding claims, wherein the electric drive unit (3) comprises one or more electric motors (21, 22), preferably two electric motors (21, 22), wherein in particular a majority of the electric motors (21, 22), preferably all electric motors (21, 22), can be arranged in a housing.

6. The semi-trailer axle assembly or centre-axle trailer axle assembly according to any one of the preceding claims, wherein the steering device (1) comprises
-- a control device (30) for receiving an external control signal and/or for outputting a control signal to the electric drive device and/or
-- a storage device for the energy supply of the electric machine.

7. The semi-trailer axle assembly or centre-axle trailer axle assembly according one of claims 5 or 6, wherein to each electric motor (21, 22) is assigned a respective storage device, wherein the steering device, in particular the storage devices, is designed in such a way that the individual electric motors (21, 22) can be supplied with different energies.

8. The semi-trailer axle assembly or centre-axle trailer axle assembly according to any one of the preceding claims, comprising a mechanically, electropneumatically or electrically controllable locking device, the locking device preferably being integrated into the electric drive unit (3).

9. The semi-trailer axle assembly or centre-axle trailer axle assembly according to any one of the preceding claims, wherein two track lever elements (7) can be pivoted via a track rod (9) or an electric drive device is assigned to each track lever element (7).

10. A method for steering a semi-trailer or centre-axle trailer, with a semi-trailer axle assembly or centre-axle trailer axle assembly according to any one of the preceding claims, which has a pivotable track lever element (7), wherein the track lever element (7) is pivoted by means of an electric drive device (3).

11. The method according to claim 10, wherein a control signal, preferably a control signal originating from a semi-trailer train, is received by means of a control device (30) and is forwarded to the electric drive device (3) for aligning the track lever element (7).

12. The method according to claim 11, wherein by means of the control device (30) several electrical drive devices (3), which are each associated with an axle assembly (10) or a track lever element (7), are controlled, wherein in particular one of the axle assemblies (10) is oversteered with respect to the other axle assemblies.

## Revendications

1. Ensemble d'essieu d'une semi-remorque ou ensemble d'essieu d'une remorque à essieu central, comprenant un dispositif de direction (1), le dispositif de direction (1) comprenant un élément de levier de voie (7) pivotant, incluant une unité d'entraînement électrique (3) qui peut être reliée à l'élément de levier de voie (7) pour orienter l'élément de levier de voie (7), dans lequel
le dispositif de direction (1) comprend un dispositif capteur,
le dispositif capteur est intégré dans l'unité d'entraînement électrique (3) ou dans l'élément de levier de voie (7),
l'unité d'entraînement électrique (3) et/ou l'élément de levier de direction (5) peuvent être reliés à un corps d'essieu (15) de l'ensemble d'essieu (10),
l'élément de levier de voie (7) peut pivoter autour d'un axe de pivotement (S),
l'élément de levier de direction (5) peut être relié à l'élément de levier de voie (7) en un premier point d'articulation (11) et au corps d'essieu (15) en un second point d'articulation (12),
un rapport d'une première distance (A1) entre le premier point d'articulation (11) et l'axe de pivotement (S) sur une seconde distance (A2) entre le second point d'articulation (12) et l'axe de pivotement (S) prend une valeur comprise entre 0,15 et 0,45.

2. Ensemble d'essieu d'une semi-remorque ou ensemble d'essieu d'une remorque à essieu central selon la revendication précédente,
dans lequel le dispositif de direction comprend un élément de levier de direction (5) qui peut être intégré dans l'unité d'entraînement électrique (3).

3. Ensemble d'essieu d'une semi-remorque ou ensemble d'essieu d'une remorque à essieu central selon l'une des revendications précédentes,
dans lequel le rapport de la première distance (A1) entre le premier point d'articulation (11) et l'axe de pivotement (S) sur la seconde distance (A2) entre le second point d'articulation (12) et l'axe de pivotement (S) prend une valeur comprise entre 0,23 et 0,37 et de préférence entre 0,28 et 0,33.

4. Ensemble d'essieu d'une semi-remorque ou ensemble d'essieu d'une remorque à essieu central selon la revendication 3,
dans lequel
la seconde distance (A2) entre le second point d'articulation (12) et l'axe de pivotement (S) est de 0,2 à 0,8 fois, de préférence de 0,25 à 0,55 fois et particulièrement de préférence de 0,35 à 0,45 fois plus grande qu'une longueur de corps d'essieu (A3) mesurée dans la même direction.

5. Ensemble d'essieu d'une semi-remorque ou ensemble d'essieu d'une remorque à essieu central selon l'une des revendications précédentes,
dans lequel
l'unité d'entraînement électrique (3) comprend un ou plusieurs moteurs électriques (21, 22), de préférence deux moteurs électriques (21, 22), et en particulier une majorité des moteurs électriques (21, 22), de préférence la totalité des moteurs électriques (21, 22), peuvent être disposés dans un boîtier.

6. Ensemble d'essieu d'une semi-remorque ou ensemble d'essieu d'une remorque à essieu central selon l'une des revendications précédentes, dans lequel le dispositif de direction (1) comprend
-- un dispositif de commande (30) pour recevoir un signal de commande externe et/ou pour émettre un signal de commande vers le dispositif d'entraînement électrique, et/ou
-- un dispositif de stockage pour l'alimentation en énergie de la machine électrique.

7. Ensemble d'essieu d'une semi-remorque ou ensemble d'essieu d'une remorque à essieu central selon l'une des revendications 5 ou 6,
dans lequel
un dispositif de stockage respectif est associé à chaque moteur électrique (21, 22),
le dispositif de direction, en particulier les dispositifs de stockage, est conçu de telle sorte que les moteurs électriques (21, 22) individuels peuvent être alimentés en énergies différentes.

8. Ensemble d'essieu d'une semi-remorque ou ensemble d'essieu d'une remorque à essieu central selon l'une des revendications précédentes,
comprenant un dispositif de verrouillage à commande mécanique, électropneumatique ou électrique, le dispositif de verrouillage étant de préférence intégré dans l'unité d'entraînement électrique (3).

9. Ensemble d'essieu d'une semi-remorque ou ensemble d'essieu d'une remorque à essieu central selon l'une des revendications précédentes,
dans lequel
deux éléments de levier de voie (7) peuvent pivoter par l'intermédiaire d'une barre de voie (9) ou un dispositif d'entraînement électrique est associé à chaque élément de levier de voie (7).

10. Procédé pour diriger une semi-remorque ou une remorque à essieu central, avec un ensemble d'essieu d'une semi-remorque ou un ensemble d'essieu d'une remorque à essieu central selon l'une des revendications précédentes, comprenant un élément de levier de voie (7) pivotant, l'élément de levier de voie (7) étant pivoté au moyen d'un dispositif d'entraînement électrique (3).

11. Procédé selon la revendication 10,
dans lequel, au moyen d'un dispositif de commande (30), un signal de commande, de préférence un signal de commande provenant d'un camion semi-remorque, est reçu et est transmis au dispositif d'entraînement électrique (3) pour orienter l'élément de levier de voie (7).

12. Procédé selon la revendication 11,
dans lequel plusieurs dispositifs d'entraînement électriques (3) qui sont associés chacun à un ensemble d'essieu (10) ou à un élément de levier de voie (7) sont commandés au moyen du dispositif de commande (30),
en particulier l'un des ensembles d'essieu (10) est commandé de manière prioritaire par rapport aux autres ensembles d'essieu.
